# FASCICULE DE BREVET EUROPEEN

(11) **EP 1 234 303 B1**
(45) Date de publication et mention de la délivrance du brevet: **02.11.2005**
(21) Numéro de dépôt: 00985378.9
(22) Date de dépôt: 01.12.2000
(51) Int. Cl.: G10L 15/18

(54) **PROCEDE ET DISPOSITIF DE RECONNAISSANCE VOCALE A MODELES DE LANGAGE DISJOINTS**
VERFAHREN UND VORRICHTUNG ZUR SPRACHERKENNUNG MIT VERSCHIEDENEN SPRACHMODELLEN
METHOD AND DEVICE FOR SPEECH RECOGNITION WITH DISJOINT LANGUAGE MODELS

(30) Priorité: 02.12.1999 FR 9915189
(43) Date de publication de la demande: 28.08.2002
(73) Titulaire: Thomson Licensing, 92100 Boulogne Billancourt (FR)
(72) Inventeur: SOUFFLET, Frédéric, Thomson Multimedia, F-92648 Boulogne Cedex (FR); TAZINE, Nour-Eddine, Thomson Multimedia, F-92648 Boulogne Cedex (FR)
(74) Mandataire: Kohrs, Martin
(86) Numéro de dépôt international: PCT/FR2000/003356
(87) Numéro de publication internationale: WO 2001/041126

(56) Documents cités:
- EP-A- 0 936 598
- WO-A-00/36591

## Description

L'invention concerne un procédé de reconnaissance vocale comportant la mise en oeuvre de plusieurs modèles de langage pour l'obtention d'une meilleure reconnaissance. L'invention concerne également un dispositif de mise en oeuvre de ce procédé.

Les systèmes d'information ou de contrôle utilisent de plus en plus souvent une interface vocale pour rendre l'interaction avec l'utilisateur rapide et intuitive. Ces systèmes devenant plus complexes, les styles de dialogue supportés sont de plus en plus riches, et l'on rentre dans le domaine de la reconnaissance vocale continue à très large vocabulaire.

La reconnaissance vocale à large vocabulaire repose sur des modèles markoviens cachés, à la fois pour la partie acoustique et pour la partie modèle de langage.

La reconnaissance d'une phrase revient donc à trouver la séquence de mots la plus probable, connaissant la donnée acoustique enregistrée par le micro.

L'algorithme de Viterbi est généralement utilisé pour cette tache.

Mais pour des problèmes pratiques, c'est-à-dire par exemple pour des vocabulaires de plusieurs milliers de mots, et même pour des modèles de langage simples de type bigram, le réseau markovien à analyser comporte trop d'états pour que l'algorithme de Viterbi puisse être appliqué dans l'état.

Des simplifications sont nécessaires.

Une simplification connue est le procédé appelé '*beam-search*' (recherche par faisceau). L'idée sur lequel il repose est simple : au cours de l'algorithme de Viterbi, certains états du treillis sont éliminés si le score qu'ils obtiennent est inférieur à un certain seuil (Le treillis étant une représentation temporelle des états et des transitions du réseau markovien). Cet élagage réduit considérablement le nombre d'états entrant dans la comparaison au cours de la recherche de la séquence la plus probable. Une variante classique est le procédé dit 'N-best search' (recherche des n meilleures solutions), qui fournit en sortie les n séquences de mots qui présentent le plus fort score.

L'élagage utilisé au cours du procédé N-best search, qui est basé sur des scores intermédiaires dans l'analyse gauche droite de la phrase, n'est parfois pas adapté à la recherche de la meilleure séquence. Deux problèmes principaux subsistent:

D'une part, si ce procédé est adapté aux modèles de langage de type n-gram, dans lesquels toute l'information du modèle de langage sur les suites de mots les plus probables est locale aux n mots consécutifs actuellement analysés, il est moins efficace pour les modèles de langage de type grammaire, qui modélisent des influences à distance entre groupes de mots. Il peut alors arriver que les n meilleures séquences retenues à un certain stade du décodage ne soient plus des candidats possibles dans l'analyse finale de la phrase, car le reste de la phrase invalide leur candidature devant des phrases de plus faible score au départ, mais plus conformes au modèle de langage représenté par la grammaire en question.

D'autre part, il arrive fréquemment qu'une application soit développée en modules ou en plusieurs étapes, chaque module étant affecté à des fonctionnalités précises de l'interface, avec des modèles de langage à priori différents. Dans le procédé n-best search, ces différents modèles de langage sont mélangés, et il en résulte que si une sous-partie de l'application présentait des taux de reconnaissance satisfaisant, il n'est pas garanti que ces taux seront conservés si l'on ajoute de nouveaux modules, même si leur champ d'application est distinct : les deux modèles vont se parasiter.

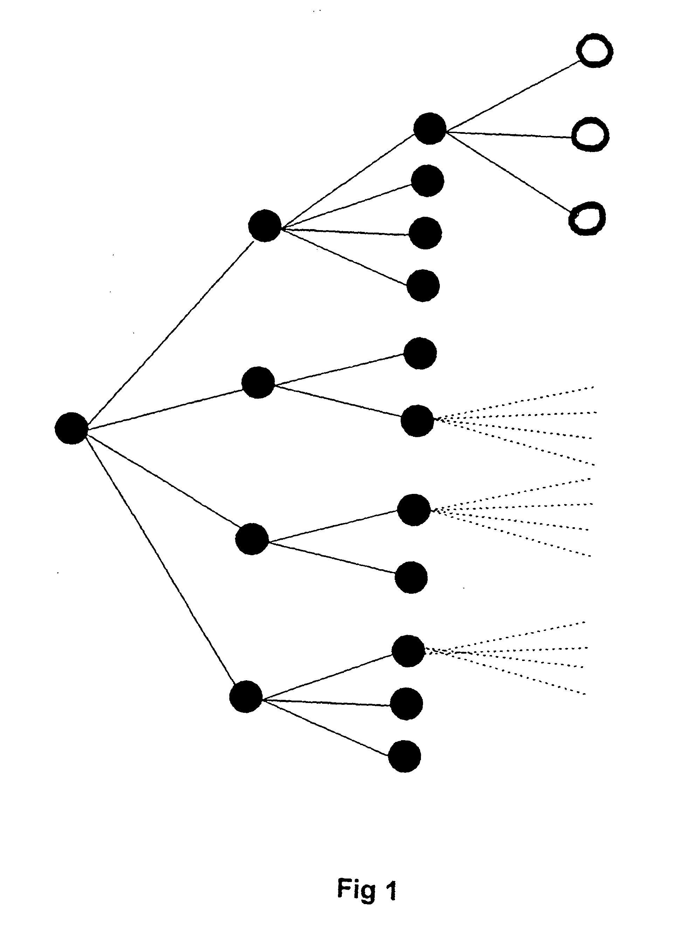

A ce titre, la figure 1 représente un diagramme d'un modèle de langage basé sur une grammaire. Les cercles noirs représentent des étapes de décisions, les traits entre ces cercles modélisent des transitions, auxquelles le modèle de langage affecte des probabilités d'occurrence, et les cercles blancs sont des mots du lexique, auxquels sont associés des réseaux markoviens, construits grâce à la connaissance phonétique de leurs prononciations possibles.

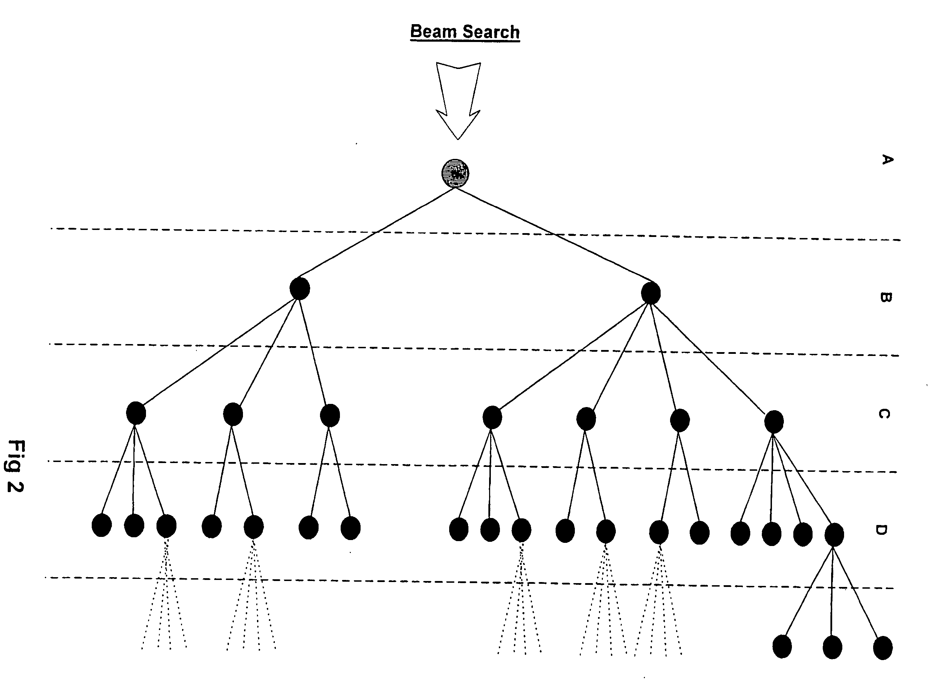

Si plusieurs grammaires sont actives dans l'application, les modèles de langage de chacune des grammaires sont mis en commun pour former un seul réseau, la probabilité initiale d'activer chacune des grammaires étant habituellement partagée de manière égale entre les grammaires, comme cela est décrit sur la figure 2, où l'on suppose que les deux transitions partant du noeud initial possèdent la même probabilité.

On est alors ramené au problème initial d'un seul modèle de langage, et le procédé 'beam search' permet, moyennant un élagage des voies de recherche jugées les moins probables, de trouver la phrase qui présente le score le plus élevé (ou les n phrase dans le cas du n-best search).

L'invention a pour objet un procédé de reconnaissance vocale comportant une étape d'acquisition d'un signal acoustique, une étape de décodage acoustico-phonétique et une étape de décodage linguistique, caractérisé en ce que l'étape de décodage linguistique comporte les étapes :
- d'application disjointe d'une pluralité de modèles de langage à l'analyse d'une séquence audio pour la détermination d'une pluralité de séquences de mots candidates ;
- de détermination par un moteur de recherche de la séquence de mots la plus probable parmi les séquences candidates.

Selon un mode de réalisation particulier, la détermination par le moteur de recherche est fonction de paramètres non pris en compte lors de l'application des modèles de langage.

Selon un mode de réalisation particulier, les modèles de langage sont basés sur des grammaires.

L'invention a aussi pour objet un dispositif de reconnaissance vocale comportant un processeur audio pour l'acquisition d'un signal audio et un décodeur linguistique pour déterminer une séquence de mots correspondant au signal audio,
caractérisé en ce que le décodeur linguistique comporte
- une pluralité de modèles de langage pour une application disjointe à l'analyse d'une même phrase pour la détermination d'une pluralité de séquences candidates,
- un moteur de recherche pour la détermination d'une séquence la plus probable parmi la pluralité de séquences candidates.

D'autres caractéristiques et avantages de l'invention apparaîtront à travers la description d'un exemple de réalisation particulier non limitatif, illustré par les figures jointes parmi lesquels :
- la figure 1 est un diagramme arborescent représentant schématiquement un modèle de langage à base de grammaire,
- la figure 2 est un diagramme arborescent représentant schématiquement la mise en oeuvre d'un algorithme de recherche sur la base de deux modèles de langage du type de la figure 1 et fusionnés en un seul modèle,
- la figure 3 est un diagramme arborescent du procédé de recherche selon l'exemple de réalisation de l'invention, appliqué à deux modèles de langage,
- la figure 4 est diagramme bloc représentant, conformément à l'exemple de réalisation, l'utilisation de modèles de langage distincts par des instances distinctes de l'algorithme de recherche,
- la figure 5 est un diagramme bloc d'un dispositif de reconnaissance de la parole mettant en oeuvre le procédé conforme au présent exemple de réalisation.

La solution proposée repose sur un élagage sémantique au cours de l'algorithme du Beam search : l'application est divisée en modules indépendants, chacun étant associé à un modèle de langage particulier.

Pour chacun de ces modules, une recherche n-best search est lancée, sans qu'un module ne se soucie des scores des autres modules. Ces analyses, faisant appel à des informations distinctes, sont donc indépendantes et peuvent être lancées en parallèle, et tirer partie d'architectures multiprocesseurs.

Nous décrirons l'invention dans le cas où le modèle de langage est basé sur l'usage de grammaire, mais un modèle de langage de type n-gram peut également tirer profit de l'invention.

Pour la description du présent exemple de réalisation, on se place dans le cadre d'une application dans le domaine du grand public, à savoir une interface utilisateur de récepteur de télévision mettant en oeuvre un système de reconnaissance vocale. Le microphone est porté par une télécommande, tandis que les données audio recueillies sont transmises au récepteur de télévision pour l'analyse vocale proprement dite. Le récepteur comporte à ce titre un dispositif de reconnaissance de la parole.

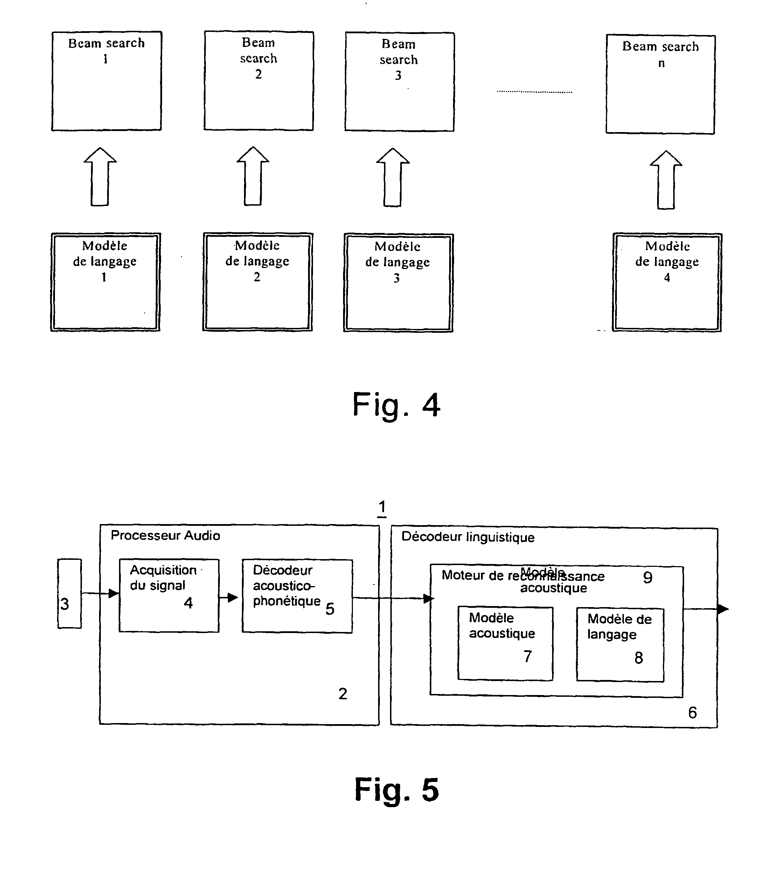

La figure 5 est un diagramme bloc d'un exemple de dispositif 1 de reconnaissance de la parole. Pour la clarté de l'exposé, l'ensemble des moyens nécessaires à la reconnaissance de la parole est intégré dans le dispositif 1, même si dans le cadre de l'application envisagée, certains éléments de début de chaîne figurent dans la télécommande du récepteur.

Ce dispositif comporte un processeur 2 du signal audio réalisant la numérisation d'un signal audio provenant d'un microphone 3 par l'intermédiaire d'un circuit 4 d'acquisition du signal. Le processeur traduit également les échantillons numériques en symboles acoustiques choisis dans un alphabet prédéterminé. Il comporte à cet effet un décodeur acoustico-phonétique 5. Un décodeur linguistique 6 traite ces symboles dans le but de déterminer, pour une séquence A de symboles, la séquence W de mots la plus probable, étant donné la séquence A.

Le décodeur linguistique utilise un modèle acoustique 7 et un modèle de langage 8 mis en oeuvre par un algorithme de recherche par hypothèse 9. Le modèle acoustique est par exemple un modèle dit 'Markov caché ('Hidden Markov model' ou HMM). Il est utilisé pour calculer des scores (probabilités) acoustiques des séquences de mots considérés au cours du décodage. Le modèle de langage mis en oeuvre dans le présent exemple de réalisation est basé sur une grammaire décrite à l'aide de règles de syntaxe de forme Backus Naur. Le modèle de langage est utilisé pour guider l'analyse du train de données audio et pour calculer des scores linguistiques. L'algorithme de recherche, qui est le moteur de reconnaissance proprement dit, est pour ce qui du présent exemple un algorithme de recherche de basé sur un algorithme de type Viterbi et appelé 'n-best'. L'algorithme de type n-best détermine à chaque étape de l'analyse d'une phrase les n séquences de mots les plus probables, étant donné les données audio recueillies. En fin de phrase, la solution la plus probable est choisie parmi les n candidats.

Les notions du paragraphe ci-dessus sont en soi bien connues de l'Homme du Métier, mais des informations supplémentaires concernant en particulier l'algorithme n-best sont données dans l'ouvrage :

"Statistical methods for speech recognition" par F. Jelinek, MIT Press 1999 ISBN 0-262-10066-5 pp. 79-84. D'autres algorithmes peuvent également être mis en oeuvre. Notamment, d'autres algorithmes de type 'Beam Search' (Recherche par faisceau), dont l'algorithme 'n-best' est une variante.

Le décodeur acoustico-phonétique et le décodeur linguistique peuvent être réalisés par l'intermédiaire d'un logiciel approprié exécuté par un microprocesseur ayant accès à une mémoire comportant l'algorithme du moteur de reconnaissance et les modèles acoustiques et de langage.

Selon le présent exemple de réalisation, le dispositif met en oeuvre plusieurs modèles de langage. L'application envisagée étant une interface de commande vocale pour le contrôle d'un guide électronique de programmes, un premier modèle de langage est adapté au filtrage des émissions proposées, dans le but d'appliquer des filtres temporels ou thématiques à la base de données d'émissions disponibles, tandis qu'un second modèle de langage est adapté à un changement de chaîne hors du contexte du guide de programmes ('zapping'). Il s'est avéré dans la pratique que des phrases acoustiquement proches pouvaient avoir des significations très différentes dans le cadre des contextes des deux modèles.

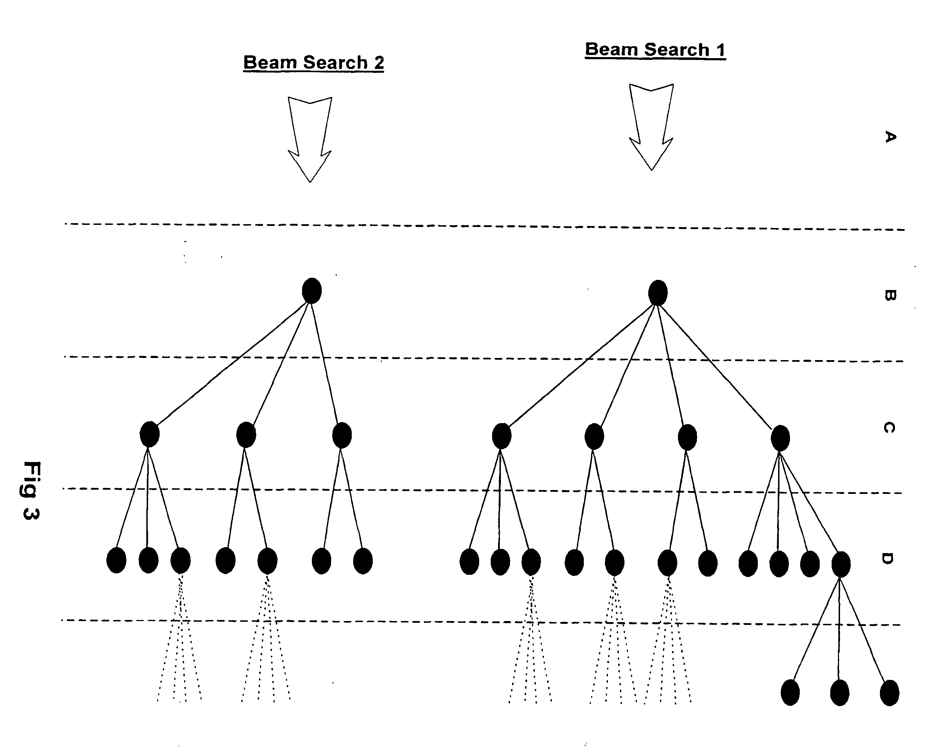

La figure 3 est un diagramme sur lequel sont schématiquement portés les arborescences correspondant à chacun des deux modèles. Comme pour les figures 1 et 2, les cercles noirs représentent des étapes de décision, les traits modélisent des transitions auxquelles le modèle de langage affecte des probabilités d'occurrence, les cercles blancs représentent des mots du lexique auxquels sont associés des réseaux markoviens, construits grâce à la connaissance phonétique de leurs prononciations possibles.

Des instances différentes du procédé beam search sont appliquées séparément à chaque modèle. Ces derniers ne sont pas fusionnés mais demeurent distincts, et chaque instance du procédé fournit une phrase la plus probable pour le modèle associé.

Selon une variante de réalisation, on applique un procédé de type n-best à un ou plusieurs ou l'ensemble des modèles.

Lorsque l'analyse est finie pour chacun des modules, le meilleur score (ou les meilleurs scores, selon la variante) de chaque module sert pour le choix de la phrase éventuellement comprise, de manière classique.

Selon une variante de réalisation, une fois l'analyse effectuée par chacun des modules, les différentes phrases candidates issues de cette analyse sont utilisées pour une seconde phase d'analyse, plus fine, utilisant par exemple des paramètres acoustiques non mis en oeuvre au cours de la phase d'analyse précédente.

Le traitement proposé consiste à ne pas former un modèle de langage global, mais à conserver des modèles de langage partiels. Chacun de façon indépendante est traité par un algorithme de beam search, et le score des meilleures séquences obtenues est calculé.

L'invention repose donc sur un ensemble de modules séparés, chacun bénéficiant d'une partie des ressources du système, qui peut proposer un ou plusieurs processeurs dans une architecture de multi-tâche préemptif, telle qu'illustrée par la figure 4.

Un avantage est que la perplexité de chaque modèle de langage en soi est faible et que la somme des perplexités des n modèles de langage présents est plus faible que la perplexité qui résulterait de leur union en un seul modèle de langage. Le traitement informatique demande donc moins de puissance de calcul.

D'autre part, lors du choix de la meilleure phrase parmi les résultats des différents procédés de recherche la connaissance du modèle de langage d'origine de la phrase donne déjà une information sur son sens, et sur le domaine applicatif qui lui est attaché. Les parseurs associés peuvent donc être dédiés à ces domaines et par conséquent être plus simples et plus efficaces.

Dans notre invention, un module présente le même taux de reconnaissance, ou plus exactement, fournit le même ensemble des n meilleures phrases et le même score pour chacune, qu'il soit utilisé seul ou avec d'autres modules. Il n'y a pas de dégradation des performances due à une fusion des modèles en un seul.

### Références :

Error bounds for convolutional codes and an asymmetrically optimum decoding algorithm. A.J. Viterbi IEEE Transactions on Information Theory, Vol IT-13, pp 260-67, 1967
Statistical methods for speech recognition. F. Jelinek. MIT Press ISBN 0-262-10066-5 pp 79-84
Perceptual linear prediction (PLP) analysis of speech. Hynek Hermansky *Journal of the Acoustical Society of America*, Vol. 87, No. 4, 1990, 1738-1752.

## Revendications

1. Procédé de reconnaissance vocale comportant une étape d'acquisition d'un signal acoustique, une étape de décodage acoustico-phonétique et une étape de décodage linguistique, **caractérisé en ce que** l'étape de décodage linguistique comporte les étapes :
- d'application disjointe d'une pluralité de modèles de langage à l'analyse d'une séquence audio pour la détermination d'une pluralité de séquences de mots candidates associés aux modèles respectifs ;
- de détermination par un moteur de recherche de la séquence de mots la plus probable parmi les séquences candidates.

2. Procédé selon la revendication 1, **caractérisé en ce qu'**il comporte une seconde phase d'analyse utilisant les séquences de mots candidates issues de l'analyse effectuée par chacun des modules et des paramètres acoustiques non mis en oeuvre au cours de la phase d'analyse précédente.

3. Procédé selon l'une des revendications 1 ou 2, **caractérisé en ce que** les modèles de langage sont basés sur des grammaires.

4. Procédé selon l'une des revendications 1 à 3, **caractérisé en ce que** chaque modèle de langage correspond à un contexte d'application différent.

5. Procédé selon la revendication 1, **caractérisé en ce que** l'étape d'application comporte l'étape de génération d'une séquence de mots la plus probable pour chaque modèle de langage.

6. Procédé selon la revendication 1, **caractérisé en ce que** l'étape d'application comporte la mise en oeuvre d'un procédé de type n-best à un ou plusieurs ou l'ensemble des modèles de langage.

7. Dispositif de reconnaissance vocale comportant un processeur audio (2) pour l'acquisition d'un signal audio et un décodeur linguistique (6) pour déterminer une séquence de mots correspondant au signal audio,
**caractérisé en ce que** le décodeur linguistique comporte
- une pluralité de modèles de langage (8) pour une application disjointe à l'analyse d'une même phrase pour la détermination d'une pluralité de séquences candidates associées aux modèles respectifs ;
- un moteur de recherche pour la détermination d'une séquence la plus probable parmi la pluralité de séquences candidates.

## Patentansprüche

1. Verfahren zur Spracherkennung, die eine Stufe zur Erfassung eines akustischen Signals, eine Stufe zur akustophonetischen Dekodierung und eine Stufe zur Sprachdekodierung beinhaltet,
**dadurch gekennzeichnet, dass**
die Stufe zur Sprachdekodierung aus folgenden Stufen besteht:
- getrennte Anwendungsstufen für eine Vielzahl von Sprachanalysemodellen, einer Tonfolge zur Bestimmung einer Vielzahl von Wortfolgekandidaten, die mit den jeweiligen Modellen verbunden sind;
- Bestimmungsstufe mit einem Suchmotor der wahrscheinlichsten Wortfolge unter den Wortfolgekandidaten.

2. Verfahren gemäß Anspruch 1
**dadurch gekennzeichnet, dass**
es eine zweite Analysephase beinhaltet und die Wortfolgekandidaten benutzt, die aus der mit jedem Modul durchgeführten Analyse und den akustischen Parametern stammen und während der vorangegangen Analysephase nicht angewendet wurden.

3. Verfahren gemäß einem der Ansprüche 1 oder 2
**dadurch gekennzeichnet, dass**
die Sprachmodelle auf Grammatiken aufgebaut sind.

4. Verfahren gemäß einem der Ansprüche 1 bis 3
**dadurch gekennzeichnet, dass**
jedes Sprachmodell einem unterschiedlichen Anwendungskontext entspricht.

5. Verfahren gemäß dem Anspruch 1
**dadurch gekennzeichnet, dass**
die Anwendungsstufe für jedes Sprachmodell die Stufe zur Generierung der wahrscheinlichsten Wortfolge beinhaltet.

6. Verfahren gemäß Anspruch 1
**dadurch gekennzeichnet, dass**
die Anwendungsstufe die Durchführung eines Verfahrens der Art n-best für eines oder mehrere oder für die Gesamtheit der Sprachmodelle beinhaltet.

7. Stimmerkennungsvorrichtung die einen Audioprozessor(2) zur Erstellung eines Audiosignals und einen Sprachdekodierer (6) zur Bestimmung einer Wortfolge, die dem Audiosignal entspricht, enthält und
**dadurch gekennzeichnet ist, dass**
der Sprachdekodierer
- eine Vielzahl an Sprachmodellen (8)enthält mit einer von der Anwendung abgetrennten Analyse des selben Satzes zur Bestimmung einer Vielzahl von Wortsequenzenkandidaten, die mit den jeweiligen Modellen verbunden sind;
- ein Suchmotor zur Bestimmung der wahrscheinlichsten Wortfolge innerhalb der Vielzahl der Wortfolgekandidaten.

## Claims

1. Process for voice recognition comprising a step of acquiring an acoustic signal, a step of acoustic-phonetic decoding and a step of linguistic decoding, **characterized in that** the linguistic decoding step comprises the steps:
- of disjoint application of a plurality of language models to the analysis of an audio sequence for the determination of a plurality of sequences of candidate words associated with the respective models;
- of determination by a search engine of the most probable sequence of words from among the candidate sequences.

2. The process as claimed in claim 1, **characterized in that** it comprises a second analysis phase using the candidate word sequences provided by the analysis done by each of the modules and acoustic parameters not used during the previous analysis phase.

3. The process as claimed in one of claims 1 or 2, **characterized in that** the language models are based on grammars.

4. Process according to one of the claims 1 to 3, **characterized in that** each language model corresponds to a different application context.

5. Process according to claim 1, **characterized in that** the application step comprises the step of generating the most probable sequence of words for each language model.

6. Process according to claim 1, **characterized in that** the application step comprises applying a n-best type process to one or several or all language models.

7. A device for voice recognition comprising an audio processor (2) for the acquisition of an audio signal and a linguistic decoder (6) for determining a sequence of words corresponding to the audio signal
**characterized in that** the linguistic decoder comprises
- a plurality of language models (8) for disjoint application to the analysis of one and the same sentence for the determination of a plurality of candidate sequences associated with the respective models,
- a search engine for the determination of a most probable sequence from among the plurality of candidate sequences.
